# EUROPEAN PATENT APPLICATION

(11) **EP 4 604 043 A1**
(43) Date of publication of application: **20.08.2025**
(21) Application number: 25156789.7
(22) Date of filing: 10.02.2025
(51) Int. Cl.: G06Q 40/00, G06Q 20/40

(54) **SYSTEM AND METHOD USING AI AND VECTOR BASED IDENTITY RESOLUTION FOR IDENTITY VERIFICATION**

(30) Priority: 14.02.2024 US 202418441399
(71) Applicant: Socure Inc., Incline Village, Nevada 89451 (US)
(72) Inventor: XIAO, Feng, Incline Village, NV (US); PARAMBATH, Vijin K.P., Incline Village, NV (US); NAGABANDI, Badri, Incline Village, NV (US); ANTO, James, Incline Village, NV (US); LI, Edward, Incline Village, NV (US); SRIKANTH, Bharath, Incline Village, NV (US); HADDAD, Ali, Incline Village, NV (US); LEVINE, Eric, Incline Village, NV (US); ABREU, Pablo Ysrrael, Incline Village, NV (US)
(74) Representative: Derry, Paul Stefan

(57) **Abstract**

In various embodiments of the present invention, identity components such as name, date of birth, address, social security number, driver's license number etc. are transformed into vector representations which are then stored in a vector search database. In preferred embodiments, each vectorized identity component represents a column in a table which is implemented as a database and which is incorporated into a trained model. This trained model is then used on a real time or near real time basis to make identity verification and fraud detection decisions in connection with proposed "transactions". These "transactions" can take various forms such as purchasing a good or service, opening an account, performing a background check and/or any other action wherein it is necessary or desirable to confirm that the person seeking to perform the transaction is who they say they are.

## Description

### FIELD OF THE DISCLOSURE

Disclosed embodiments relate to the use of vectors, AI and machine learning techniques to accomplish identity verification, and more specifically, to the use of machine learning and AI techniques and systems employing vectorized components stored in a database to perform identity verification and reverification.

### BACKGROUND

In today's business environment, almost all businesses have an online presence. A great majority of these businesses permit their customers to conduct transactions online. These transactions almost always involve either a financial component or otherwise require a trust-based element. For example, when a customer purchases a good or service, it is critical to determine that the person (or machine) initiating and conducting the transaction is who they say they are. This identity verification is required to ensure that the form of payment (e.g. credit card) is authorized for use by the purported purchaser. If the purchaser cannot be verified, then a variety of undesirable results can occur, such as chargebacks and other revenue losses.

Even when there is no financial component to a transaction, negative consequences can still result if one of the participants is not who they say they are. For example, businesses may offer other types of online services which provide access to data, access to sensitive systems or resources or the ability to conduct non-financial transactions impacting the operation of the business. It is necessary to do whatever is possible to ensure that the person, entity or machine seeking to conduct these types of interactions are who they say they are and that their purported activity is not fraudulent.

Various fraud detection and identity verification methodologies and related systems for implementing the same exist. While these offerings are generally helpful and effective, there exists a need for novel approaches to the problem of verifying identities and preventing fraud in connection with online activities.

In typical implementations, it is necessary to perform identity entity resolution to make identity verification and fraud detection decisions. This means that various data elements from known sources are attempted to be matched against other data elements provided at the time that a transaction or other action requiring identity verification is performed. Traditional methods and systems rely on fuzzy string matching with respect to these data elements (which may include, for example, name, address, social security number, etc.) in order to link/match identities or resolve that identities do not match and then take action accordingly. This is necessary because these data elements typically have a certain level of fuzziness, such as the use of nicknames in place of the proper first name. Also, the data elements, as presented to the system may contain minor errors such as in case of data extracted from OCR or as a result of user input errors.

Fuzzy string matching uses a designated algorithm in an attempt to match strings that are similar but not necessarily identical. Since this approach does not use binary logic to assess matching, it may fail in some cases to provide an accurate determination as to whether or not a match between strings reflects the actual truth.

Another drawback of such implementations is that they are generally unable to use image matching as a component of the determination as to whether or not an identity should be verified. This is because the string matching algorithms can not be applied to images as they typically exist in formats such as bitmap or JPEG types. Because image matching can be an extremely valuable component of identity verification and fraud detection applications, the inability to incorporate the same often produces less than ideal results.

Another drawback associated with existing systems and methodologies for making identity verification and fraud detection determinations is that they require significant processing time and resource usage. When data components are stored and processed as textual strings, system resources such as CPU cycles and memory can be taxed. As a result, determinations which are expected to be provided on a real time basis or close to a real time basis can be delayed beyond expectations particularly at peak processing times.

Thus, as will be understood, there is a need for a system and methodology in which identity verification and fraud detection determinations can be processed in a manner that is less error prone, reduces the burden on computing resources and which is generally more efficient and accurate in terms of results produced.

### SUMMARY OF THE INVENTION

It is to be understood that both the following summary and the detailed description are exemplary and explanatory and are intended to provide further explanation of the present embodiments as claimed. Neither the summary nor the description that follows is intended to define or limit the scope of the present embodiments to the particular features mentioned in the summary or in the description. Rather, the scope of the present embodiments is defined by the appended claims.

Embodiments may include a method and system which employs vectorization of data components associated with identity verification and fraud detection in order to more accurately and more efficiently perform matching operations as between independent sources of information associated with identities of individuals. In preferred embodiments, advanced computer vision and language models are used to generate vectorized data as well as to leverage such data in order to make identity verification and fraud detection determinations.

The system and methodology of the present invention, in some embodiments, may employ machine learning and artificial intelligence methodologies in order to enhance performance. In preferred embodiments, a model is trained prior to use in production and then once production use is invoked, the model may be iteratively improved as entity resolution transactions are processed by the system.

In various embodiments of the present invention, identity components such as name, date of birth, address, social security number, driver's license number etc. are transformed into vector representations which are then stored in a vector search database. This involves training one or more models to convert textual data elements into vectors such that if a first input textual element is similar to a second input textual element, the resulting vectors will be the same or similar whereas if the elements are different, the vector representations will be different. In this context, similar textual elements represent data elements presumably associated with the same identity.

In preferred embodiments of the present invention, image similarity associated with images such as selfies and headshots from identification documents may also be used in connection with the vector search database in order to perform identity verification and fraud detection functions. As noted above, a model is trained to encode image data into vector data such that if source image data presumed to be associated with the same identity is provided to the system in multiple versions, but yet is associated with the same identity, the resulting vectors should be the same or similar.

In preferred embodiments, each vectorized identity component (image and/or textual) represents a column in a table which is implemented as a portion of a vector search database. This vector search database is then used on a real time or near real time basis to make identity verification and fraud detection decisions in connection with proposed "transactions". These "transactions" can take various forms such as purchasing a good or service, opening an account, performing a background check and/or any other action wherein it is necessary or desirable to confirm that the person seeking to perform the transaction is who they say they are.

When a new transaction (i.e. proposed identity) is presented to the system, one or more of the columns in the vector search database is compared against one or more data elements associated with the new transaction to determine if the proposed identity is a likely match with one or more of the rows in the vector search database. If a match is sufficiently likely, then the data associated with the transaction can be added to the vector search database as a new row representing a known identity. Alternatively, if certain of the columns match (e.g. image) but other don't match (e.g. date of birth, name, social security, address, etc.), the system may determine that proposed transaction is likely to be fraudulent and flag it as such.

According to the teachings of the present invention, the system is trained using large quantities of component data containing data associated with specifically anticipated fields. In this case, textual data is vectorized and added to the vector search database. In addition, in preferred embodiments, the vector search database is also supplemented using sample images which are also vectorized and stored in the database associated with the model. Once the system is placed into production, the vector database is applied as against newly provided component data and/or images to make identity verification and fraud detection determinations.

### BRIEF DESCRIPTION OF THE DRAWINGS

**Figure 1** is a diagram depicting the major components of the system of the present invention, including various elements with which the system of the present invention may interact, in preferred embodiments thereof;
**Figure 2** is an illustration demonstrating the encoding models used to convert images and textual data to a vectorized format according to the teachings of the present invention in a preferred embodiment thereof;
**Figure 3** is an illustration demonstrating an exemplary vector search database including a plurality of known identities according to the teachings contained herein;
**Figure 4** is an illustration demonstrating an exemplary purported identity to be verified according to the teachings contained herein; and
**Figure 5** is an example of system operation with respect to multiple passports associated with an identity that may be noted as non-verifiable according to the teachings of the present invention.

### DETAILED DESCRIPTION OF THE INVENTION

The present disclosure will now be described in terms of various exemplary embodiments. This specification discloses one or more embodiments that incorporate features of the present embodiments. The embodiment(s) described, and references in the specification to "one embodiment", "an embodiment", "an example embodiment", etc., indicate that the embodiment(s) described may include a particular feature, structure, or characteristic. Such phrases are not necessarily referring to the same embodiment. The skilled artisan will appreciate that a particular feature, structure, or characteristic described in connection with one embodiment is not necessarily limited to that embodiment but typically has relevance and applicability to one or more other embodiments.

In the several figures, like reference numerals may be used for like elements having like functions even in different drawings. The embodiments described, and their detailed construction and elements, are merely provided to assist in a comprehensive understanding of the present embodiments. Thus, it is apparent that the present embodiments can be carried out in a variety of ways, and does not require any of the specific features described herein. Also, well-known functions or constructions are not described in detail since they would obscure the present embodiments with unnecessary detail.

The description is not to be taken in a limiting sense, but is made merely for the purpose of illustrating the general principles of the present embodiments, since the scope of the present embodiments are best defined by the appended claims.

It should also be noted that in some alternative implementations, the blocks in a flowchart, the communications in a sequence-diagram, the states in a state-diagram, etc., may occur out of the orders illustrated in the figures. That is, the illustrated orders of the blocks/communications/states are not intended to be limiting. Rather, the illustrated blocks/communications/states may be reordered into any suitable order, and some of the blocks/communications/states could occur simultaneously.

All definitions, as defined and used herein, should be understood to control over dictionary definitions, definitions in documents incorporated by reference, and/or ordinary meanings of the defined terms.

The indefinite articles "a" and "an," as used herein in the specification and in the claims, unless clearly indicated to the contrary, should be understood to mean "at least one."

The phrase "and/or," as used herein in the specification and in the claims, should be understood to mean "either or both" of the elements so conjoined, i.e., elements that are conjunctively present in some cases and disjunctively present in other cases. Multiple elements listed with "and/or" should be construed in the same fashion, i.e., "one or more" of the elements so conjoined. Other elements may optionally be present other than the elements specifically identified by the "and/or" clause, whether related or unrelated to those elements specifically identified. Thus, as a non-limiting example, a reference to "A and/or B", when used in conjunction with open-ended language such as "comprising" can refer, in one embodiment, to A only (optionally including elements other than B); in another embodiment, to B only (optionally including elements other than A); in yet another embodiment, to both A and B (optionally including other elements); etc.

As used herein in the specification and in the claims, "or" should be understood to have the same meaning as "and/or" as defined above. For example, when separating items in a list, "or" or "and/or" shall be interpreted as being inclusive, i.e., the inclusion of at least one, but also including more than one, of a number or list of elements, and, optionally, additional unlisted items. Only terms clearly indicated to the contrary, such as "only one of or "exactly one of," or, when used in the claims, "consisting of," will refer to the inclusion of exactly one element of a number or list of elements. In general, the term "or" as used herein shall only be interpreted as indicating exclusive alternatives (i.e. "one or the other but not both") when preceded by terms of exclusivity, such as "either," "one of," "only one of," or "exactly one of "Consisting essentially of," when used in the claims, shall have its ordinary meaning as used in the field of patent law.

As used herein in the specification and in the claims, the phrase "at least one," in reference to a list of one or more elements, should be understood to mean at least one element selected from any one or more of the elements in the list of elements, but not necessarily including at least one of each and every element specifically listed within the list of elements and not excluding any combinations of elements in the list of elements. This definition also allows that elements may optionally be present other than the elements specifically identified within the list of elements to which the phrase "at least one" refers, whether related or unrelated to those elements specifically identified. Thus, as a non-limiting example, "at least one of A and B" (or, equivalently, "at least one of A or B," or, equivalently "at least one of A and/or B") can refer, in one embodiment, to at least one, optionally including more than one, A, with no B present (and optionally including elements other than B); in another embodiment, to at least one, optionally including more than one, B, with no A present (and optionally including elements other than A); in yet another embodiment, to at least one, optionally including more than one, A, and at least one, optionally including more than one, B (and optionally including other elements); etc.

It will be understood that, although the terms first, second, etc. may be used herein to describe various elements, these elements should not be limited by these terms. These terms are only used to distinguish one element from another. For example, a first element could be termed a second element, and, similarly, a second element could be termed a first element, without departing from the scope of example embodiments. As used herein, the term "and/or" includes any and all combinations of one or more of the associated listed items. As used herein, the singular forms "a", "an" and "the" are intended to include the plural forms as well, unless the context clearly indicates otherwise.

The word "exemplary" is used herein to mean "serving as an example, instance, or illustration." Any embodiment described herein as "exemplary" is not necessarily to be construed as preferred or advantageous over other embodiments. Additionally, all embodiments described herein should be considered exemplary unless otherwise stated.

Aspects of the present disclosure are directed to identity verification and fraud detection systems and methodologies where data components associated with individuals are converted from either a textual string (in the case of identity data) or from an image to a vector format. The system of the present invention, in preferred embodiments, is first trained using exemplary data such that the model encompasses a reasonably large dataset of vectors. Training also involves the presentation of individual datasets (herein referred to as "active datasets") that are processed with data contained in the vector dataset to determine whether there is likely a match indicative of the active dataset being valid.

Once training of the system is complete, the system of the present invention may be implemented in production mode. In some embodiments, training of the system continues in production as additional active datasets are presented in connection with potential transactions. Machine learning techniques are employed in order to train the system to be as effective as possible.

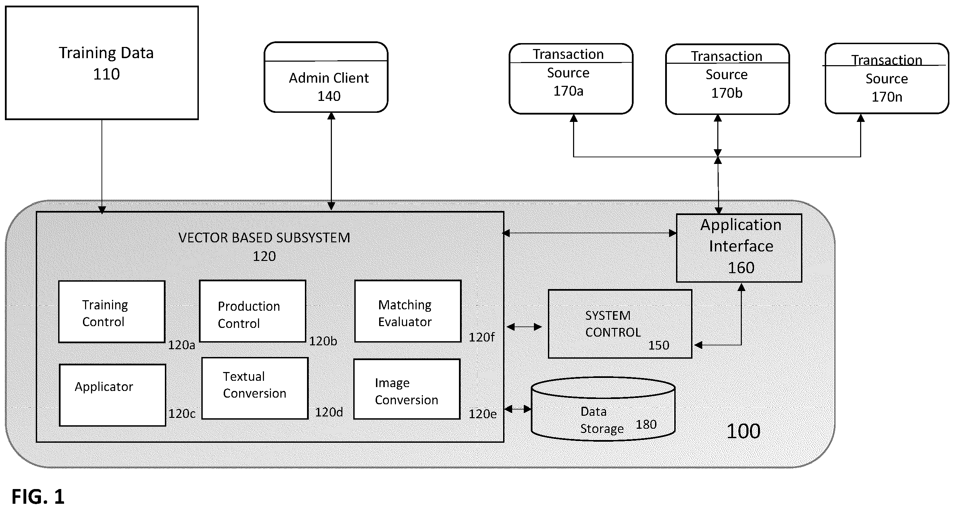

Referring now to FIG. 1, there is illustrated a Vector Based Identity Verification System (VBIVS) 100 according to one or more embodiments herein. VBIVS 100 may reside on a single cloud based server although it is also possible for various components of VBIVS 100 (as described herein) to reside on separate servers. By way of example, VBIVS 100 may be a computer implemented application which resides on a computing server. As will be apparent from the discussion herein, VBIVS 100 may include and/or implement all appropriate software and/or hardware for carrying out its identity verification and fraud detection functionalities and related capabilities. Operation of VBIVS 100 is under the control of system control 150.

VBIVS 100 preferably includes Vector Based Subsystem (VBS) 120, which itself is comprised of a number of modules as discussed further herein. VBS 120 operates to perform identity verification and fraud detection determinations based on transaction source data originating from transaction source(s) 170. In some embodiments, production operation follows training of VBS 120 and identity data is received via transaction source(s) 170 in connection with a proposed transaction. Receipt of such identity data from transaction source(s) 170 is under the control of system control 150 which communicates with VBS 120 and manages data via application interface 160. Application interface 160 may comprise one or more application programming interfaces (APIs) that permit applications associated with transaction source(s) 170 to communicate with VBS 120.

VBS 120 may be accessed, in some embodiments, by an administrative client 140 for the purpose of administrating the operation of the VBS 120 including how and when training is performed as well as various operational aspects associated with the handling of identity data components as they are provided to VBS 120 via transaction source(s) 170 for the purpose of performing identity verification and/or fraud detection operations. Admin client 140 may comprise a personal computer, a laptop, a handheld computing device such as a smartphone or a tablet or any other similar device.

As will be further detailed in the present description, training data 110 may be provided to VBIVS 100, and VBS 120 in particular, in order to train VBS 120 to most effectively and accurately compare identity data sets associated with a proposed transaction against known data associated with the claimed identity. In some embodiments, results obtained from training operations (including, for example, sets of identity data components associated with an individual person) may be stored in data storage 180. In some embodiments, data storage 180 may alternatively or in addition store data associated with previous iterations of data matching as between data provided by transaction source(s) 170 and known identities contained in data storage 180. This data may, in some embodiments, be used in connection with the initial and/or ongoing training of VBS 120. In preferred embodiments, data components associated with identities (for both images and textual data) are stored and processed as vectors, and as such, providing unique operational benefits as more fully described herein.

Returning now to the specific components of VBIVS 100, VBS 120 may include various components for training itself as well as attempting to match data components associate with identities to increase the likelihood that correct identity verification and fraud detection determinations are made by VBS 120. In preferred embodiments, these determinations are returned to an originating source (such as a third party software application) via transaction source(s) 170 so that the originating source can act upon the determination.

VBS 120 may reside on one or more physical servers. These servers may include electronic storage, one or more processors, and/or other components. The servers may also include communication lines, or ports to enable the exchange of information with a network and/or other computing platforms. The servers may include a plurality of hardware, software, and/or firmware components operating together to provide the functionality attributed herein to VBS 120.

Electronic storage associated with the servers may comprise non-transitory storage media that electronically stores information. The electronic storage media of electronic storage may include one or both of system storage that is provided integrally (i.e., substantially non-removable) with servers and/or removable storage that is removably connectable to the servers via, for example, a port or a drive.

Electronic storage may include one or more of optically readable storage media (e.g., optical disks, etc.), magnetically readable storage media (e.g., magnetic tape, magnetic hard drive, floppy drive, etc.), electrical charge-based storage media (e.g., EEPROM, RAM, etc.), solid-state storage media (e.g., flash drive, etc.), and/or other electronically readable storage media. Electronic storage may include one or more virtual storage resources (e.g., cloud storage, a virtual private network, and/or other virtual storage resources). Electronic storage may store software algorithms, information determined by processors, information received from servers, information received from transaction sources 170 and admin client 140 as well as training data 110, and/or other information that enables the servers to function as described herein.

While an exemplary architecture is described above, it will readily be understood by one of skill in the art, that an unlimited number of architectures and computing environments are possible while still remaining within the scope and spirit of the present embodiments.

Returning now to the specific components of Vector Based Subsystem (VBS) 120 shown in FIG. 1, VBS 120 includes various components which are described hereinbelow. Operation(s) of each of these components will be described at a high level now and then in further detail later in the present disclosure.

In preferred embodiments, VBS 120 includes training control module 120a. This module is responsible for managing the training process required to train VBS 120 to determine whether an identity submitted with a proposed transaction is a likely match with known data associated with the identity. This includes processing sample textual data and images contained within training data 110 during the training phase and apply machine learning techniques to develop a data set which is used during the production phase to perform identity entity resolution functions. In some embodiments, VBS 120 may autogenerate a very large set of synthetic data (example images and textual data) based on a base set of training data sourced from training data 110 external to system 100. Alternatively training data 110 may comprise sufficient externally generated data so as to adequately initially train VBS 120. In any event, and in preferred embodiments, VBS 120 generates or has made available to it large amounts of sample images and textual data which are processed to train the model to make identity entity resolution determinations in connection with transactions as they are presented to system 100 during production processing.

So, for example, training control 120a may operate to manage the provision of thousands (or some larger or smaller number) of example identities as represented by an inter-related set of data components such as name, date of birth, address, social security number, phone number as well as image data such as selfie picture of the individual's face. Training data 110 which comprises images is included in preferred embodiments as it is very useful as a data element in order to make identity entity resolution determinations. Additional details regarding the training process according to the teachings of the present invention in preferred embodiments are provided below.

Another component contained within VBS 120 in preferred embodiments of the present invention is applicator 120c. Applicator 120c (as well as the previously mentioned components) works under the control of training control 120a. As described above, training control 120a manages the process of initial training of the model prior to production use and also, in some embodiments, manages the process of continued refinement of the model during production as a result of additional transaction submissions and related identity data received as well as the application of machine learning techniques as further discussed herein.

Applicator 120c, in preferred embodiments of the present invention, operates to develop the model based upon exemplary identity data components preferably including imaging data. In one key aspect of the present invention, prior to the use of such identity data components for training purposes, the data is vectorized and stored in a database of identities as more fully described below. In some embodiments, conventional KYC entity resolution use cases may employ textual elements only and images are not always required. For impersonation fraud detection use cases, images are typically required. Other use cases may call for images and partial textual elements being required, while some textual elements can be optional.

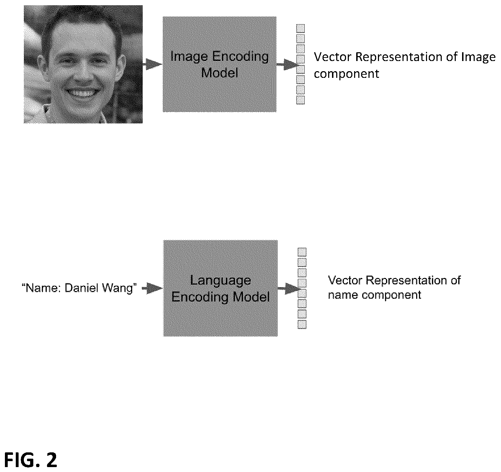

Vectorization is performed under the control of textual conversion module 120d (in the case of textual data) or image conversion module 120e (in the case of image data). The processing of images and textual data into vectors for use in making entity resolution determinations is shown Fig. 2. As can be seen in Fig. 2, two different models (text and image) are designed and configured to convert source data into a vector representation of the original data.

In preferred embodiments, image models, such as convolutional neural networks and/or image transformers, can be used to transform an image into a vector. Correspondingly, transformer based language models can transform textual data into vectors.

Matching evaluator component 120f is also included within VBS 120 according to the present invention, in preferred embodiments thereof. Matching evaluator component operates under the control of production control component 120b during production operations and functions to attempt to match incoming identity data which has been vectorized against one or more identity component sets stored in data storage 180. In preferred embodiments, during production, upon receipt of a proposed transaction (along with the identity data) sourced by transaction source 170 and under the direction of system control 150, VBS 120 implements the trained model and, in particular, seeks to match identities and then report the results back to transaction source 170 or to some other external system. The results of these matching efforts may, in turn, be stored in data storage 180 for use in further training of VBS 120 and/or for downstream use in connection with another application, system or subsystem.

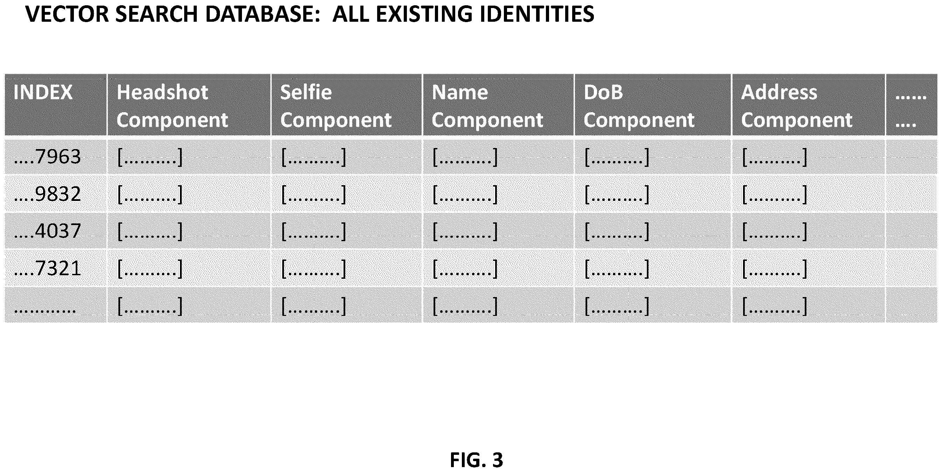

Turning now to Fig. 3 and in connection therewith, a more detailed discussion of the training process as implemented by the system of the present invention in preferred embodiments is now provided. Training data 110 may be a series of datasets, each one associated with a single identity. As such, the training data may comprise datasets reflecting various characteristics associated with the identity such as name, date of birth, address, phone number etc. In addition, and in preferred embodiments, image data is also provided during the training phase. Images may include headshots, selfies and other photos demonstrating physical characteristics of the individual associated with the identity. Data sets for training may be sourced from third party databases, from sets of identification documents such as driver's licenses and passports as well as various other data sources.

In connection with the training under the control of training control 120a, all data components associated with each identity are vectorized as described above. Once this is completed, each identity is assigned an index value and is reflected in a row of the table in Fig. 3. Associated with each index/row/identity is a series of identity components which are stored in database 180 in vector form and reflect the various columns in the table of Fig. 3 (the [........] in the Figure represents a value represented in vector form). The vector search database is grown to a point where there is sufficient data to complete training and implement production. In preferred embodiments, additional rows of data (additional identities and their related components) are added as identities are verified through production processing of identity verification and fraud detection requests.

Models and various synthetic methods may be applied to the vectorized data to generate different identities. As will be apparent to one of skill in the art, the database format shown in Fig. 3 is merely exemplary. Various other data components (columns) can be added and/or substituted. In addition, the database structure for storing the model may be implemented in many different ways as is known in the art.

In preferred embodiments, training occurs to a large part prior to placing system 100 in production but the effectiveness of the model may continue to be enhanced during the production phase using the inputs received during usage in production to continually enhance the model in order to achieve better and better results with continued usage. These enhancements and the continued betterment of the model is achieved through machine learning techniques as applied to a machine learning model.

A "machine learning model" or "model" as used herein, refers to a construct that is trained using training data to make predictions or provide probabilities for new data items, whether or not the new data items were included in the training data. Examples of models include: neural networks (traditional, deeps, convolution neural network (CSS), recurrent neural network (RNN)), support vector machines, decision trees, decision tree forests, Parzen windows, Bayes, clustering, reinforcement learning, probability distributions, decision trees, and others. Models can be configured for various situations, data types, sources, and output formats.

According to the teachings of the present invention, in preferred embodiments thereof, the trained model is configured to assess the level of similarity between vectorized identity components based on known identities as against vectorized identity components supplied in connection with a proposed transaction or some other request for identity verification and/or to minimize the risk of fraud. Therefore, at the time of production, the model applies these comparisons between and among the various components of a known identity versus a set of identity data purported to be valid with respect to a specific individual. The use of vectors for storing and processing identity components provides numerous advantages over prior art solutions including allowing for more efficient and accurate comparisons between data as well as a reduced strain on computing and memory resources within system 100.

With reference still to Figs. 2 and 3, the operation of VBS 120 in the production context and in preferred embodiments thereof is now discussed. In this case, VBS 120 has preferably been previously trained so that it can receive identity data to be verified via transaction source 170. Once the data is received, it is converted into vector format as described above. Next, given the training of the model, it is now possible to compare vectors representing data components as between the data associated with the purported identity as against data components associated with known identities.

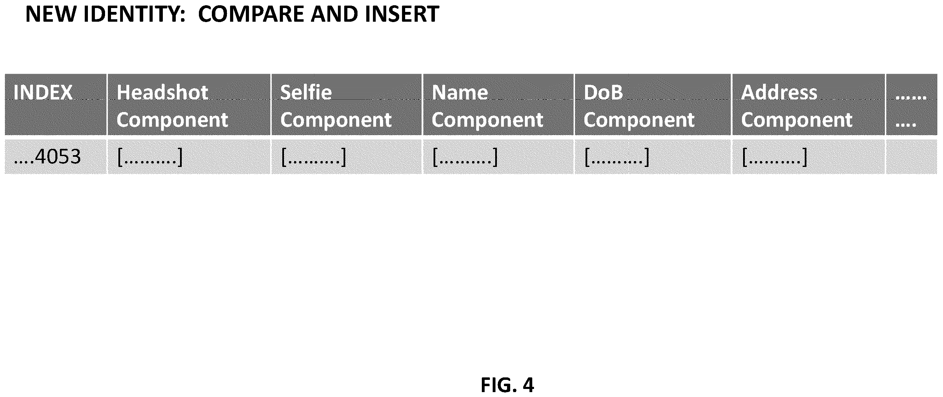

So, for example, if a new purported identity is to be validated, some or all of the data components associated with that purported identity (as represented in vector format and by the table in Fig. 4) can be compared against some or all of the data components associated with known identities (as represented in vector format and by the table in Fig. 3). By way of example, VBS 120 may operate so as to reject purported identities as invalid when it finds a mismatch between the vectorized head shot image and one or more of the other data components associated with that image. For example, if VBS 120 finds two different dates of birth associated with the same head shot image, that head shot image and all purported identities including that head shot image will be rejected such that the purported identity can not be verified. This can then be reported back to transaction source 170 or another third party system which, in most cases, will not allow the proposed transaction to take place. As noted above, in some uses cases, images are required while in others, determinations may be made solely based on textual data.

Other methodologies for attempting to match identities as such identities are represented as vectorized forms of one or more data components are also possible. For example, two data components such as name and date of birth could be compared against social security number. With respect to updating the model, if there are cases where a single social security number is contained in multiple identities and those identities include different dates of birth and/or different names, then all identities containing that social security number may be flagged as potentially fraudulent.

Many other configurations for validating identities according to the present invention are also possible and may include comparing any or all of the available data components for identities against each other and applying a metric resulting from the comparison reflecting the "closeness" of the vectorized data elements to each other.

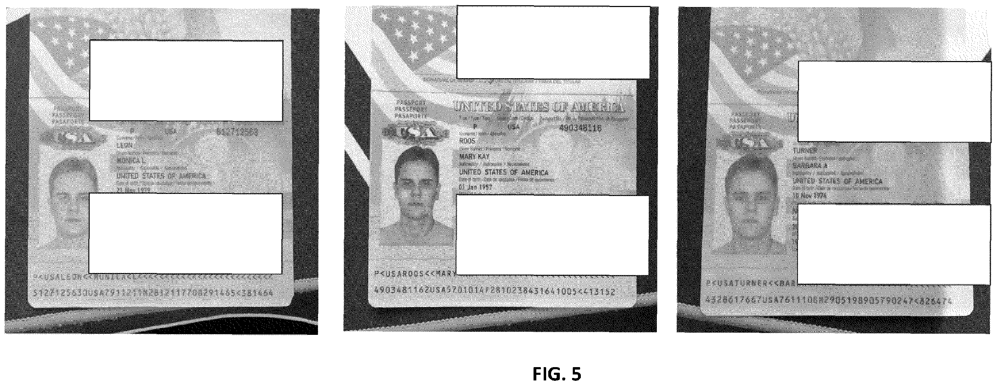

With reference now to Fig. 5, an example of the implementation of the teachings of the present invention is provided. In this case, three different passports are shown. Each of these passports has the same or a similar head shot photo. In accordance with the teachings of the present invention, VBS 120 will confirm a baseline value of similarity between each of the three photos as they are represented in vector form. But, as can be seen in the Figure, this image is associated with multiple different data sets on the different passports. By way of example, the image is associated with different passport numbers, different names, different dates of birth, etc. When this data is fed into VBS 120 either during training or during production, the image can be flagged likely fraudulent such that no purported identities containing that image will be verified.

In some embodiments, vector comparisons to determine similarities and/or differences between vectorized data may be accomplished through use of cosine similarity measurements. These measurements may be implemented by determining the cosine of the angle between two vectors and thus deciding whether two vectors are pointing in roughly the same direction. A system threshold for cosine angle may be specified as a configuration parameter depending on the specific implementation of the system and these thresholds may vary depending on the specific data element being assessed for similarity.

In some embodiments of the present invention, rows represented in the vector search database may include a tag indicative of whether that row (representing either a transaction or identity) is valid or invalid. Manual intervention may be used to adjust tag status from invalid to valid in the case that external information is available to warrant such an adjustment.

The teachings of the present invention may be applied to various applications where identity verification and/or fraud detection with respect to identities is desired. By way of example and not limitation, identity verification and fraud detection functionalities as described herein could be applied to online gaming applications, financial transactions, healthcare transactions, online gambling transactions as well as many others. The teachings may also be applied when there is a requirement for re-verification rather than an initial verification such that a less robust set of data matching is required to re-confirm the identity of an individual.

The present embodiments are not limited to the particular embodiments illustrated in the drawings and described above in detail. Those skilled in the art will recognize that other arrangements could be devised. The present embodiments encompass every possible combination of the various features of each embodiment disclosed. One or more of the elements described herein with respect to various embodiments can be implemented in a more separated or integrated manner than explicitly described, or even removed or rendered as inoperable in certain cases, as is useful in accordance with a particular application While the present embodiments have been described with reference to specific illustrative embodiments, modifications and variations of the present embodiments may be constructed without departing from the spirit and scope of the present embodiments as set forth in the following claims.

While the present embodiments have been described in the context of the embodiments explicitly discussed herein, those skilled in the art will appreciate that the present embodiments are capable of being implemented and distributed in the form of a computer-usable medium (in a variety of forms) containing computer-executable instructions, and that the present embodiments apply equally regardless of the particular type of computer-usable medium which is used to carry out the distribution. An exemplary computer-usable medium is coupled to a computer such the computer can read information including the computer-executable instructions therefrom, and (optionally) write information thereto. Alternatively, the computer-usable medium may be integral to the computer. When the computer-executable instructions are loaded into and executed by the computer, the computer becomes an apparatus for practicing the embodiments. For example, when the computer-executable instructions are loaded into and executed by a general-purpose computer, the general-purpose computer becomes configured thereby into a special-purpose computer. Examples of suitable computer-usable media include: volatile memory such as random access memory (RAM); nonvolatile, hard-coded or programmable-type media such as read only memories (ROMs) or erasable, electrically programmable read only memories (EEPROMs); recordable-type and/or re-recordable media such as floppy disks, hard disk drives, compact discs (CDs), digital versatile discs (DVDs), etc.; and transmission-type media, e.g., digital and/or analog communications links such as those based on electrical-current conductors, light conductors and/or electromagnetic radiation.

Although the present embodiments have been described in detail, those skilled in the art will understand that various changes, substitutions, variations, enhancements, nuances, gradations, lesser forms, alterations, revisions, improvements and knock-offs of the embodiments disclosed herein may be made without departing from the spirit and scope of the embodiments in their broadest form.

## Claims

1. A system configured to generate identity verification results for identities included in online account opening transactions, the system comprising:
one or more processors configured to execute computer program modules comprising a first model, and a physical storage capability, said first model comprising;
a training computer program module operative to receive raw identity data from at least one source of raw identity data and process said raw identity data to generate vectorized identity data comprising one or more known identities and being stored in an identity database, said one or more identities each being stored as an array comprising a plurality of columns of vectorized raw identity data components and one or more rows of said known identities each respectively corresponding to a set of said plurality of columns of vectorized raw identity components;
and
an identity matching computer program module operative to, based on said one or more known identities, generate identity verification scores through a 1:1 matching between said plurality of columns of said vectorized raw identity data components comprising said vectorized identity data and a plurality of first personal information data vectorized for the matching, said vectorized first personal information data comprising corresponding first identifying information associated with a first individual person and being purported, by said first individual person, to comprise a first respective identity, for said first individual person, corresponding to a respective online account opening transaction of said online account opening transactions,
wherein, in response to said identity matching computer program module generating at least one identity verification score, of said identity verification scores, representing a match between an identity of said one or more known identities and said plurality of vectorized first personal information data, said identity matching computer program module is operative to generate at least one further identity verification score through a 1:1 matching between (a) said plurality of columns of said vectorized raw identity data components comprising said vectorized identity data, (b) said identity represented by said match between an identity, of said one or more known identities, and said plurality of vectorized first personal information data, and (c) vectorized second personal information data comprising second identifying information associated with a second individual person;
wherein, in response to a generation of said at least one further identity verification score through said matching of (a), (b), and (c), said vectorized second personal information data, comprising said second identifying information associated with said second individual person, is added to said identity database as one or more additional columns thereof, thereby generating an additional row of said identity database representing a corresponding additional known identity of said identity database; and
wherein each of said identity verification scores is based on a cosine similarity measurement between at least one of said vectorized raw identity data components of a known identity and at least one of said plurality of vectorized first and/or second personal information data.

2. The system of claim 1 wherein said raw identity data comprises image data and wherein said image data is vectorized and stored in said identity database as a component of said vectorized identity data.

3. The system of claim 2 wherein said first and/or second personal information data comprises image data which is vectorized by said system and compared as against said image data which has been vectorized and stored in said identity database.

4. The system of claim 3 wherein said image data comprises a head shot, or wherein said image data contains a photograph obtained from a driver's license.

5. The system of any preceding claim wherein said raw identity data comprises one or more data components of the following: name, date of birth, address, social security number or phone number.

6. The system of any preceding claim wherein results generated from an attempt at matching vectorized personal information data with vectorized identity data comprise a numerical score indicative of the likelihood of a match.

7. The system of claim 6 wherein said numerical score is reported to a transaction source from which said personal information data has been received.

8. The system of any preceding claim wherein a purported identity may be rejected based upon a mismatch between a vectorized image and one or more other data components associated with said vectorized image.

9. A computer-implemented method of generating identity verification results for identities included in online transactions, the method being implemented in a computer system comprising one or more processors configured to execute computer program modules, the method comprising the steps of:
receiving raw identity data from at least one source and processing said raw identity data to generate vectorized identity data comprising one or more known identities;
storing each of said one or more known identities in an identity database as an array comprising a plurality of columns of vectorized raw identity data components and one or more rows of said known identities each respectively corresponding to a set of said plurality of columns of vectorized raw identity components;
receiving a plurality of first personal information data associated with a first individual person from a client, said first personal information data being purported, by said first individual person, to comprise a respective first identity, for said first individual person, corresponding to a respective online transaction of said online transactions;
vectorizing said first personal information data associated with said first individual person;
generating, based on said one or more known identities, identity verification scores through a 1:1 matching between said plurality of columns of said vectorized raw identity data components comprising said vectorized identity data and said vectorized first personal information data; and
transmitting said identity verification scores to said client,
wherein, in response to generating at least one identity verification score, of said identity verification scores, representing a match between an identity of said one or more known identities and said plurality of said vectorized first personal information data, generating at least one further identity verification score through a 1:1 matching between (a) said vectorized identity data, (b) said identity represented by said match between an identity, of said one or more known identities, and said plurality of vectorized first personal information data, and (c) vectorized second personal information data comprising second identifying information associated with a second individual person;
wherein, in response to a generation of said at least one further identity verification score through said matching of (a), (b), and (c), said vectorized second personal information data, comprising said second identifying information associated with said second individual person, is added to said identity database as one or more additional columns thereof, thereby generating an additional row of said identity database representing a corresponding additional known identity of said identity database; and
wherein each of said identity verification scores is based on a cosine similarity measurement between at least one of said vectorized raw identity data components of a known identity and at least one of said plurality of vectorized first and/or second personal information data.

10. The method of claim 9 wherein said raw identity data comprises image data and wherein said image data is vectorized and stored in said identity database as a component of said vectorized identity data.

11. The method of claim 10 wherein said first and/or second personal information data comprises image data which is vectorized and compared as against said image data which has been vectorized and stored in said identity database.

12. The method of claim 11 wherein said image data comprises a head shot or contains a photograph obtained from a driver's license.

13. The method of any of claims 9 to 12 wherein said raw identity data comprises one or more data components of the following: name, date of birth, address, social security number or phone number.

14. The method of any of claims 9 to 13 wherein results generated from an attempt at matching vectorized personal information data with vectorized identity data comprise a numerical score indicative of the likelihood of a match, and optionally wherein said numerical score is reported to a transaction source from which said personal information data has been received.

15. The method of any of claims 9 to 14 wherein a purported identity may be rejected based upon a mismatch between a vectorized image and one or more other data components associated with said vectorized image.
